# EUROPÄISCHE PATENTSCHRIFT

(11) **EP 2 407 241 B1**
(45) Veröffentlichungstag und Bekanntmachung des Hinweises auf die Patenterteilung: **06.03.2013**
(21) Anmeldenummer: 10169898.3
(22) Anmeldetag: 16.07.2010
(51) Int. Cl.: B01J 35/04, B01J 37/02, B01J 19/24

(54) **Struktur und Aufbau eines Katalysators zur Erhöhung der Effektivität von katalytischen chemischen Prozessen**
Structure and assembly of a catalyst for increasing the effectiveness of catalytic chemical processes
Structure et montage d'un catalyseur pour l'augmentation de l'efficacité de processus chimiques catalytiques

(43) Veröffentlichungstag der Anmeldung: 18.01.2012
(73) Patentinhaber: Wagner, Edmund, Dr.-Ing., 65187 Wiesbaden (DE)
(72) Erfinder: Edmund Wagner, 65187 Wiesbaden. (DE)
(74) Vertreter: WSL Patentanwälte Partnerschaftsgesellschaft

(56) Entgegenhaltungen:
- DE-A1- 10 335 967
- US-A1- 2002 013 225
- US-B1- 6 746 651

## Beschreibung

Diese Erfindung betrifft einen monolithischen Feststoffkatalysator für die Durchführung einer heterogenen katalytischen chemischen Reaktion in einem Reaktionsfluid.

Katalyse wird in der chemischen Verfahrenstechnik umfangreich eingesetzt, um Reaktionen zu beschleunigen oder um Reaktionsgleichgewichte in eine bestimmte Richtung zu verschieben. Ein Katalysatortyp ist der Feststoffkatalysator, der die Reaktion von Gasen oder Flüssigkeiten heterogen katalysiert. Beispiele für solche Katalysen sind etwa die Fischer-Tropsch-Synthese (FTS), der Sabatier-Prozess, das Haber-Bosch-Verfahren oder eine Vielzahl von anderen Reaktionen, die mit Feststoffkatalysatoren ablaufen. Der Katalysator kann beispielsweise in einem Festbettreaktor in Form einer Schüttung oder Packung aus Feststoffpartikeln eingesetzt werden. Die Partikel der Schüttung oder Packung können dabei aus dem Katalysatormaterial bestehen oder damit beschichtet sein. Eine Alternative dazu sind Monolithreaktoren, bei denen der Katalysator einstückig oder aus fest miteinander verbundenden Bauteilen, die gemeinsam einen zusammenhängenden Katalysatorkörper bilden, aufgebaut ist.

Ein Nachteil der Monolithreaktoren im Vergleich zu Festbettreaktoren ist, dass Monolithreaktoren durch ihren grundsätzlich blockförmigen Aufbau zu einem schlechten Oberfläche-zu-Volumen-Verhältnis tendieren. Um diesen Nachteil zu vermeiden, werden solche Katalysatoren daher häufig mit einer Vielzahl von Durchtrittsöffnungen hergestellt, so dass einem reagierenden Fluid beim Durchströmen des Reaktors eine möglichst große katalytisch wirksame Oberfläche präsentiert wird (vgl. Güttel et al., "Reaktoren für die Fischer-Tropsch-Synthese", Chemie Ingenieur Technik, 2007, 79, No. 5, S. 531-543).

Ein weiterer Nachteil herkömmlicher Monolithreaktoren ist, dass ein Reaktor üblicherweise nur aus einem Material besteht oder mit nur einem bestimmten katalytisch wirksamen Material beschichtet ist. Ein solcher Monolithreaktor kann daher nicht ohne weiteres für Reaktionen eingesetzt werden, bei denen zur Erzielung einer optimalen Katalyse verschiedene katalytisch wirksame Substanzen erforderlich sind.

US 2002/0013224 beschreibt einen monolithischen Katalysator, dessen Monolith ein aktives Katalysatormaterial umfasst, dass von einer mehrschichtigen Struktur getragen wird, wobei die mehrschichtige Struktur einen Stapel von porösen, dünnen Metallteilen umfasst, wobei ein Teil der Oberflächen dieser Metallteile über eine thermisch leitfähige Verbindung miteinander verbunden ist.

DE 103 35 967 A1 beschreibt einen Reaktor für Gasphasenreaktionen in Gegenwart eines partikelförmigen Katalysators, wobei der Reaktor aus einer oder mehreren Lochplatten besteht, die die Platte vollstandig durchdringende Öffnungen aufweisen, in die der partikelförmige Katalysator aufgenommen werden kann.

US 6,746,651 B1 beschreibt einen Stapel von sehr dünnen Metallplatten zur Bereitstellung einer großen Oberfläche für den katalytischen Abbau eines Fluids, wobei auf der abstromigen Oberfläche jeder Platte Lücken vorgesehen sind, durch die ein lateraler Fluß des Fluids zwischen den Platten stattfinden kann.

Aufgabe der Erfindung ist es daher, die genannten Nachteile zu vermeiden und einen monolithischen Feststoffkatalysator zu schaffen, in dem verschiedene katalytische Reaktionen zugleich ablaufen können.

Diese Aufgabe wird dadurch gelöst, dass ein monolithischer Feststoffkatalysator bereitgestellt wird für die Durchführung einer heterogenen katalytischen chemischen Reaktion in einem Reaktionsfluid, welches den Katalysator durchströmt und wenigstens ein Edukt umfasst, wobei der Katalysator wenigstens eine Durchtrittsöffnung für das Durchströmen des Reaktionsfluids durch den Katalysator aufweist, wobei der Katalysator einen schichtweisen Aufbau aus wenigstens zwei flächig aufeinander angeordneten Schichten aufweist, wobei die wenigstens eine Durchtrittsöffnung durch die Schichten des Aufbaus verläuft und wobei wenigstens die Oberfläche, die in einer ersten Schicht des Aufbaus wenigstens einen Teil des Innenwandungsabschnitts der wenigstens einen Durchtrittsöffnung definiert, aus einem ersten katalytisch wirksamen Material besteht und wenigstens die Oberfläche, die in einer zweiten Schicht des Aufbaus wenigstens einen Teil eines Innenwandungsabschnitts der wenigstens einen Durchtrittsöffnung definiert, aus einem zweiten katalytisch wirksamen Material besteht, so dass das Reaktionsfluid beim Durchströmen des Katalysators mit wenigstens zwei verschiedenen katalytisch wirksamen Materialien in Kontakt gebracht wird.

An der Oberfläche des Katalysators treten im Zusammenhang mit der katalytischen Reaktion Physisorption und Chemisorption auf (vgl. Ertl, Reaktionen an Oberflächen: Vom Atomaren zum Komplexen, Angewandte Chemie 2008-120/19, S. 3582 ff.). Der Vorteil des schichtweisen Aufbaus des erfindungsgemäßen Katalysators liegt darin, dass verschiedene Bereiche des Katalysatorkörpers aus verschiedenen Materialien hergestellt werden können. Auf diese Weise kann ein Monolithreaktor gebildet werden, der an den Oberfächen der mit dem Reaktionsfluid in Kontakt tretenden Durchtrittsöffnungen verschiedene katalytisch wirksame Materialien für die Reaktion des die Durchtrittsöffnung durchströmenden Fluids bereitstellen kann.

Die Schichten werden dabei so aufeinander aufgebracht, dass zwei Oberflächen der Schichten, die von jeweils wenigstens einer Durchtrittsöffnung durchdrungen werden, im Wesentlichen fluiddicht aufeinander aufliegen. Die Durchtrittsöffnungen in den einzelnen Schichten sind so angeordnet, dass das Reaktionsfluid von einer Durchtrittsöffnung in einer ersten Schicht in eine Durchtrittsöffnung in der auf der ersten Schicht aufliegenden zweiten Schicht fließen kann.

In einer Ausführungsform der Erfindung liegt die Anzahl der flächig aufeinander angeordneten Schichten des monolithischen Feststoffkatalysators in dem schichtweisen Aufbau im Bereich von 10 bis 1000.

Die Oberfläche, die in zwei benachbarten Schichten des Aufbaus wenigstens einen Teil des Innenwandungsabschnitts der wenigstens einen Durchtrittsöffnung definiert, kann in bestimmten Abschnitten des Katalysators aus dem gleichen katalytisch wirksamen Material bestehen, so lange die Oberfläche der Durchtrittsöffnung in einer diesen beiden Schichten vorangehenden oder folgenden zweiten Schicht des Aufbaus aus einem zweiten katalytisch wirksamen Material besteht.

In verschiedenen Abschnitten des Katalysators können unterschiedliche katalytisch wirksame Materialien in verschiedenen geeigneten Abfolgen eingesetzt werden. Durch entsprechende Wahl der Materialien an der Oberfläche der Durchtrittsöffnungen in den jeweiligen Schichten kann in unterschiedlichen Abschnitten des monolithischen Feststoffkatalysators und somit im Verlauf der Reaktion entlang der Durchtrittsöffnungen ein jeweils anderer Teil einer Reaktion katalysiert werden.

In einer weiteren Ausführungsform können auch nur wenige verschiedene, beispielsweise zwei oder drei katalytisch wirksame Substanzen jeweils an der Oberfläche einer Schicht angeordnet werden, und die Schichten mit den unterschiedlichen Oberflächen in einem wiederkehrenden Muster aufeinander geschichtet in dem monolithischen Feststoffkatalysator angeordnet werden, um einen quasi-homogenen Katalysator aus verschiedenen katalytisch wirksamen Materialien herzustellen. Beispielsweise können sich zwei oder eine andere Anzahl bis maximal zehn katalytisch wirksame Substanzen an den Oberflächen der aufeinanderfolgenden Schichten abwechseln. Es können auch zwei oder mehr Schichten aufeinander folgen, die dasselbe katalytische Material bereitstellen. Die Reihenfolge der katalytischen Schichten kann auch ohne wiederkehrendes Muster beliebig gewählt werden, um bestimmte vorteilhafte Katalysen in verschiedenen Abschnitten des Katalysators zu ermöglichen.

Die aufeinanderfolgenden Schichten können alternierend oder in beliebiger Reihenfolge zwei oder mehr verschiedene katalytische Materialien in der Durchtrittsöffnung bereitstellen

In einer Ausführungsform der Erfindung bestehen wenigstens manche der Schichten des Aufbaus vollständig aus dem katalytisch wirksamen Material dieser Schicht. Ein solcher Katalysator kann beispielsweise aus Folien oder Blechen aus einer katalytisch wirksamen Substanz bestehen.

Da Katalysatormaterialien teilweise sehr teuer sind, kann es aus Kostengründen sinnvoll sein, einen kostengünstigen Träger als Schicht einzusetzen und diesen vollständig oder nur an Teilen der Durchtrittsöffnungen mit einem katalytisch wirksamen Material zu überziehen, wobei nicht ausgeschlossen ist, dass der Träger des Überzugs selbst irgendeine katalytische Wirkung haben kann, nicht jedoch die speziell in dem Abschnitt des Katalysators gewünschte. Dementsprechend besteht bei einer Ausführungsform der Erfindung bei wenigstens einem Teil der Schichten des Aufbaus nur die Oberfläche, die in den Schichten wenigstens einen Teil des Innenwandungsabschnitts der wenigstens einen Durchtrittsöffnung definiert, aus einem katalytisch wirksamen Material. Vorzugsweise besteht bei allen Schichten des Aufbaus nur die Oberfläche, die in den Schichten wenigstens einen Teil des Innenwandungsabschnitts der wenigstens einen Durchtrittsöffnung definiert, aus einem katalytisch wirksamen Material. Der Preis des monolithischen Feststoffkatalysators lässt sich auf diese Weise erheblich reduzieren. Für das Überziehen kommen beispielsweise geeignete bekannte Verfahren der Beschichtungstechnik in Frage.

Bei bestimmten Ausführungsformen sind die katalytisch wirksamen Materialien unter Eisen, Kupfer, Kobalt, Platin, Ruthenium, Rubidium und Iridium sowie Legierungen oder Kombinationen der genannten Metalle ausgewählt.

In einer weiteren Ausführungsform weisen die Schichten verschiedene Schichtdicken auf, so dass durch die Auswahl der Schichtdicken und wahlweise der Schichtanzahl bei gleicher Reaktionsgeschwindigkeit unterschiedliche Verweilzeiten des Reaktionsfluids für die verschiedenen katalytischen Materialien aufweisen.

Unter Umständen müssen verschiedene Stufen der Reaktion, die möglicherweise nacheinander ablaufen, verschieden lange Zeiten katalysiert werden. Dazu kann es sinnvoll sein, einzelne der Schichten dicker auszuführen, um so eine längere Verweildauer des Fluids vor der betreffenden Schicht zu bewirken.

Bei der vorliegenden Erfindung wird eine Durchtrittsöffnung durch deckungsgleiche oder zumindest überlappend nacheinander angeordnete durchgehende Ausnehmungen in den aufeinanderliegenden Schichten gebildet, so dass das Reaktionsfluid von einer Ausnehmung in einer ersten Schicht in die deckungsgleiche oder zumindest überlappend danach angeordnete Ausnehmung in der auf der ersten Schicht aufliegenden Schicht und auf diese Weise letztlich durch den ganzen monolithischen Feststoffkatalysator fließen kann.

In einer weiteren Ausführungsform ist in wenigstens einem Abschnitt der wenigstens einen Durchtrittsöffnung die Oberfläche, die in einer ersten Schicht des Aufbaus wenigstens einen Teil eines Innenwandungsabschnitts der Durchtrittsöffnung definiert, gegenüber der Oberfläche, die in einer flächig darauf angeordneten zweiten Schicht wenigstens einen Teil des Innenwandungsabschnitts der Durchtrittsöffnung definiert, versetzt angeordnet, so dass hierdurch in dem wenigstens einen, durch diese beiden Schichten definierten Abschnitt der Durchtrittsöffnung freistehende Kanten im Inneren der Durchtrittsöffnung vorliegen.

Ein solcher Aufbau kann durch das Schichten von Blechen unter teilweiser Überlappung von Ausnehmungen in den einzelnen Schichten, die scharfkantig ausgeführt sind, erreicht werden. Der Vorteil einer solchen Anordnung ist, dass ein Fluid, das durch die Durchtrittsöffnungen strömt, an den scharfen Kanten Turbulenzen bildet, wodurch eine bessere Durchmischung des Fluids und ein stärkerer Austausch zwischen Oberfläche des Katalysators und dem Reaktionsfluid stattfindet.

Vorzugsweise ist ein Großteil der Oberfläche der Schichten des Aufbaus mit einer Vielzahl von einzelnen Durchtrittsöffnungen durchsetzt, um eine möglichst gute Ausnutzung des Volumens des Katalysators und ein gutes Oberfläche-zu-Volumen-Verhältnis zu erreichen. Die Fläche der einzelnen Ausnehmungen kann im Bezug auf die Oberfläche der Schicht in einem Verhältnis von 1 zu 10, 1 zu 100, 1 zu 1000 und bis zu 1 zu 10.000 oder darüber hinaus oder in zwischen den genannte Werten liegenden Verhältnissen stehen.

In einer weiteren Ausführungsform verläuft wenigstens eine Durchtrittsöffnung zwischen dem Anfang der Durchtrittsöffnung an einem Ende des Katalysators und dem Austritt der Durchtrittsöffnung am anderen Ende des Katalysators helikal. Durch diese Maßnahme wird der Weg des Fluids durch eine Durchtrittsöffnung durch den Katalysator verlängert, ohne dass sich dessen Bauhöhe ändert. Es kann damit ein vergleichsweise flacher Katalysator realisiert werden.

Die helikale Struktur der Durchtrittsöffnung kann dadurch hergestellt werden, dass die Durchtrittsöffnungen in den einzelnen Schichten zueinander so versetzt angeordnet sind, dass sie, wenn sie aufeinander geschichtet sind, eine helikale Durchtrittsöffnung ergeben. Die Helix kann dabei eine zylindrische oder konische Helix sein. Mehrere in einem Katalysatorkörper vorgesehene helikale Durchtrittsöffnungen können so angeordnet sein, dass sich deren umhüllende Zylinder durchdringen, ohne dass jedoch die einzelnen Durchtrittsöffnungen miteinander verbunden sind. Dies kann erreicht werden, indem Richtung und Betrag des Versatzes von wenigstens zwei, vorzugsweise allen Durchtrittsöffnungen in übereinanderliegenden Schichten für zwei benachbarte helikale Durchtrittsöffnungen gleich sind.

In einer alternativen Ausführungsform mit helikaler Durchtrittsöffnung der Erfindung ist die wenigstens eine Durchtrittsöffnung auf einer Seite durch eine Ausnehmung an der Innenwandung eines durch den Katalysatorschichtaufbau verlaufenen Hohlzylinders oder Hohlkegels und auf einer zweiten Seite durch einen in den Hohlzylinder bzw. Hohlkegel passgenau einsetzbaren Körper gebildet, wobei der passgenau einsetzbare Körper wahlweise eine ebene Außenwandung aufweist oder an seiner Außenwandung einer Ausnehmung aufweist, die im eingesetzten Zustand so zum Liegen kommt, dass sie in Verbindung mit der Ausnehmung an der Innenwand des Hohlzylinders oder Hohlkegels die wenigstens eine Durchtrittsöffnung ausbildet.

Auf diese Weise kann ein flacher Katalysatoraufbau mit helikalen Durchtrittsöffnungen hergestellt werden, ohne dass helikale Durchtrittsöffnungen in dem Katalysatorblock selbst benötigt werden. Die helikale Struktur ist auf dem Hohlzylinder bzw. dem Hohlkegel aufgebracht. Die Struktur ist dafür beispielsweise als ein- oder mehrgängiges Gewinde ausgeführt. Der eingesetzte Hohlzylinder bzw. Hohlkegel kann denselben Schichtaufbau wie der Katalysatorblock aufweisen.

In einer weiteren Ausführungsform liegt die Anzahl der Durchtrittsöffnungen für das Durchströmen des Reaktionsfluids durch den Katalysator in dem Bereich von 1 bis 1000. Durch eine große Anzahl von Durchtrittsöffnungen wird eine große wirksame Oberfläche des Katalysators erreicht. Es können auch 10.000 oder mehr Durchtrittsöffnungen verwendet werden, z.B. Wabenkörper.

Ein weiterer Aspekt der Erfindung betrifft eine Anlage zur Durchführung heterogener katalytischer chemischer Reaktionen in einem Reaktionsfluid, wobei die Anlage einen Katalysator nach der Erfindung umfasst.

In noch einer weiteren Ausführungsform der Anlage umfasst die Anlage mehrere in additivmodularer Anordnung parallel geschaltete Fischer-Tropsch-Reaktoren oder Sabatier-Reaktoren mit einem erfindungsgemäßen Katalysator. Zusätzlich können Elektrolysatoren und/oder Einrichtungen zur Gewinnung von CO₂ mit gleichem Aufbau und gleicher Größe in die Anlage integriert sein.

In noch einer weiteren Ausführungsform der Anlage wird in dieser die Fischer-Tropsch-Synthese durchgeführt. In der Anlage kann auch die Sabatier-Synthese durchgeführt werden.

Bei der Durchführung der Fischer-Tropsch-Synthese oder der Sabatier-Synthese in der Anlage können der Druck und die Temperatur so gewählt werden, dass Wasser und/oder Kohlendioxid und/oder weitere Stoffe in superkritischem Zustand vorliegen. Die Katalyse kann dadurch verbessert werden.

In einer weiteren Ausführungsform der Anlage weist diese zusätzlich eine Vorrichtung zur Gewinnung des Edukts CO₂ aus Luft und/oder zusätzlich eine Vorrichtung zur Gewinnung des Edukts (H₂) mittels Elektrolyse aus Wasser auf. Auf diese Weise wird die Anlage unabhängig von der direkten Belieferung mit den genannten Edukten. Sie kann daher autark an Standorten, an denen elektrischer Strom, Luft und Wasser zur Verfügung stehen, aufgestellt werden. Die Anlage kann noch autarker gestaltet werden, indem der Strom für die Anlage aus erneuerbaren Energien, z. B. Fotovoltaik, Windkraft oder Biomasse, stammt.

Ein weiterer Aspekt der Erfindung betrifft ein Verfahren zur Herstellung eines Katalysators nach der Erfindung, bei dem Schichten, die wenigstens teilweise katalytisch aktive Oberflächen aus gleichem oder unterschiedlichem Material aufweisen, flächig aufeinander aufgebracht werden.

Dieses Verfahren kann durchgeführt werden, indem bekannte, geeignete Plattierverfahren verwendet werden, oder Blechstapel mit geeigneten Maßnahmen zusammengepresst werden, oder Schichten im Vakuum, beispielsweise durch Aufdampfen oder Sputtern oder andere bekannte PVD- oder CVD-Verfahren, oder galvanisch aufeinander abgeschieden werden, oder ein Katalysatorblock dadurch hergestellt wird, dass aufeinander aufgebrachte Pulverschichten gesintert werden.

Eine Schichtung aus Folien oder Blechen mit Durchtrittsöffnung ist herstellbar, indem die Bleche oder Folien zur Herstellung von Durchtrittsöffnungen gelocht, z.B. durch Laserschneiden, dann gestapelt und beispielsweise durch Zusammenspannen, Verlöten oder Verschweißen zu einem monolithischen Katalysator verbunden werden. Die Schichten können auch durch Plattierverfahren oder andere, einem Fachmann geläufige geeignete Verbindungsverfahren aufgebracht werden, z.B. Washcoat.

In einer weiteren Ausführungsform des Verfahrens wird zur Herstellung der wenigstens einen Durchtrittsöffnung eine Ausnehmung an der Innenwandung eines durch den Katalysatorschichtaufbau verlaufenden Hohlzylinders oder Hohlkegels erzeugt und in den Hohlzylinder bzw. Hohlkegel passgenau ein Körper eingesetzt, wobei der passgenau eingesetzte Körper eine ebene Außenwandung aufweist und/oder an seiner Außenwandung eine Ausnehmung aufweist, die im eingesetzten Zustand so zum Liegen kommt, dass sie in Verbindung mit der Ausnehmung an der Innenwandung des Hohlzylinders oder Hohlkegels die wenigstens eine Durchtrittsöffnung ausbildet.

Auf diese Weise kann erreicht werden, dass in dem Katalysatorblock einfach herzustellende Hohlzylinder oder Hohlkegel bereitgestellt werden, wogegen die Ausnehmungen auf der Außenkontur des eingesetzten Körpers vergleichsweise einfach auch mit kompliziertem Verlauf hergestellt werden kann. Auf diese Weise kann vermieden werden, komplizierte Formen auf der Oberfläche engere Durchtrittsöffnungen erzeugen zu müssen.

In einer weiteren Ausführungsform wird die Anlage wie im folgenden beschrieben realisiert. Dabei weist die Anlage zusätzlich eine Vorrichtung zur Gewinnung des Edukts CO₂ aus Luft auf. Das Prinzip für die Gewinnung des CO₂ aus Luft ist dabei aus M. Specht und A. Bandi (Zeitschrift "Forschungsverbund Sonnenenergie" Themen 94/95) bekannt, jedoch wird der Prozess durch einen Katalysator nach der Erfindung verbessert.

In einer ersten Stufe der Anlage wird mit einem Verdichter Luft angesaugt und in einen Absorber gefördert. Der Absorber wird mit Kalilauge gespeist, die Kohlendioxid aus der eingeleiteten Luft absorbiert. Die nach der Absorption verbleibende Restluft wird aus dem Prozess entfernt. Durch die Absorption von Kohlendioxid an Kalilauge entsteht Kaliumcarbonat. Aus dem Absorber tritt somit eine Mischung aus Kalilauge und Kaliumcarbonat aus. Mit einer Pumpe wird die aus dem Absorber austretende Lösung teilweise wieder zu dessen Eingang zurückgeführt. Der nicht zurückgeführte Teil wird zu einer Kohlendioxid-Entgasungsstufe weitergeleitet. In dieser Stufe wird dem Kaliumcarbonat das Kohlendioxid entzogen, indem das Kalium mit Schwefelsäure zu Kaliumsulfat gebunden wird. Kohlendioxid wird dabei freigesetzt. In einer Elektrodialysestufe wird das Kaliumsulfat wieder zu Schwefelsäure rezykliert, indem ihm das Kalium entzogen wird und dieses unter Zugabe von Wasser zu Kalilauge umgesetzt wird. Dabei werden Sauerstoff und Wasserstoff frei. Der Sauerstoff wird aus dem Prozess entfernt, während der Wasserstoff in einer zweiten Stufe der Anlage weiterverwendet wird. Die Kalilauge wird als aufbereitetes Absorptionsmittel für weiteres Kohlendioxid wieder in den Absorber geleitet. Dem Kohlendioxid, das der Luft L auf diese Weise entzogen wurde, kann Recycling-Kohlendioxid aus Verbrennungsprozessen hinzugefügt werden, soweit dieses vorhanden ist.

In der zweiten Stufe der Anlage wird aus Wasser und dem wie beschrieben gewonnen Kohlendioxid Methanol und andere Kohlenwasserstoffe erzeugt. Die Stufe umfasst einen Wärmetauscher, eine Hochtemperatur-Elektrolysestufe und einen Reaktor mit einem weiteren Wärmetauscher. Das Wasser wird durch den Wärmetauscher am Reaktor durch die bei der Reaktion frei werdende Wärme verdampft. Der Wasserdampf wird mit dem zugeführten Kohlendioxid gemischt und in dem Wärmetauscher erhitzt. Das erhitzte Gemisch aus Kohlendioxid und Dampf wird der Hochtemperatur-Elektrolysestufe zugeführt, in der daraus Kohlenmonoxid, Wasserstoff und Sauerstoff gewonnen werden. Diese Gase werden in den Wärmetauscher geleitet, in dem die Wärme aus den genannten Produktgasen den Eduktgasen wieder zugeführt wird. Außerdem wird in dem Wärmetauscher der Sauerstoff abgespalten. Das Synthesegas aus Kohlenmonoxid und Wasserstoff wird einem zweiten Verdichter zugeführt, in den auch der bei der Elektrodialyse in der ersten Stufe entstehende Wasserstoff eingespeist wird. In einer besonderen Ausführungsform sorgt der Verdichter dafür, dass die Reaktionsgase in den superkritischen Zustand überführt werden. Das verdichtete Synthesegas wird dem Reaktor zugeführt, der einen Katalysator nach der Erfindung enthält. In dem Reaktor wird die Fischer-Tropsch-Synthese oder die Sabatier-Synthese durchgeführt. Bei letzterer kann auf die Herstellung von Kohlenmonoxid in der Hochtemperatur-Elektrolysestufe verzichtet werden. Durch die Synthese entstehen Methanol und andere Kohlenwasserstoffe als Ausgangsprodukt der Anlage.

Weitere Vorteile, Merkmale und Anwendungsmöglichkeiten der Erfindung ergeben sich sowohl aus der folgenden Beschreibung bevorzugter Ausführungsformen, als auch aus den dazugehörigen Figuren. Es zeigen:
- Figur 1A:: schematisch einen Katalysator nach dem Stand der Technik,
- Figuren 1 B und 1C:: verschiedene Ausführungsformen des Katalysators nach der Erfindung,
- Figur 2A:: eine Ausführung des Katalysators nach der Erfindung mit helikalen Durchtrittsöffnungen,
- Figur 2B:: eine Ansicht einer Oberfläche eines Katalysators nach der Erfindung, in der Durchtrittsöffnungen eingebracht sind,
- Figur 2C:: einen Ausschnitt der Oberfläche einer helikalen Durchtrittsöffnung im Schnitt,
- Figur 3A:: eine Helix mit mehreren zuordenbaren Parametern,
- Figur 3B:: eine perspektivische Darstellung einer Helix mit einem zuordenbaren Parameter,
- Figur 4:: einen Querschnitt durch einen Ausschnitt aus einem Katalysator nach der Erfindung, wobei in dem Ausschnitt eine Durchtrittsöffnung mit einer helikalen Struktur der Oberfläche der Durchtrittsöffnung gezeigt ist,
- Figur 5A:: eine Durchtrittsöffnung mit einem passgenau eingesetzten Körper, wobei helikale Durchtrittsöffnungen entstehen.
- Figur 5B:: einen Körper mit einer helikalen Struktur auf seiner Oberfläche, der zum Einsetzten in eine Durchtrittsöffnung vorgesehen ist,
- Figur 6:: eine schematische Darstellung einer Anlage, in der ein Katalysator nach der Erfindung eingesetzt wird, und

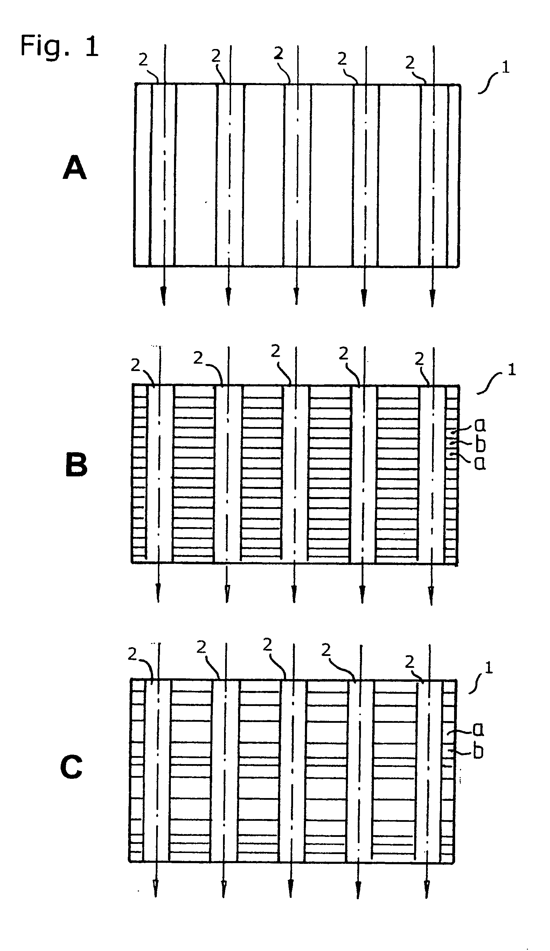

Figur 1A zeigt einen herkömmlichen Katalysator 1 mit Durchtrittsöffnungen 2 nach dem Stand der Technik. Die Pfeile in den Durchtrittsöffnungen zeigen die Strömungsrichtung eines Fluids durch den Katalysator an.

Figur 1B zeigt einen monolithischen Katalysator 1 nach der Erfindung, der aus Schichten aufgebaut ist. In dieser Ausführungsform wechseln sich Schichten a und b aus unterschiedlichen Materialien ab. Die Durchtrittsöffnungen 2 werden von einem Fluid in Pfeilrichtung geströmt.

Figur 1C zeigt einen Querschnitt durch eine weitere Ausführungsform des monolithischen Katalysators 1 nach der Erfindung. In dieser Ausführungsform sind die Schichten mit unterschiedlicher Stärke ausgebildet und können aus mehreren verschiedenen Materialien bestehen. Beispielhaft sind zwei Schichten aus unterschiedlichen Materialien mit a und b bezeichnet. Die Auswahl der Schichtstärke und des Schichtmaterials können an den Reaktionsverlauf angepasst werden, so dass in verschiedenen Stufen der Reaktion jeweils die optimale Katalyse stattfindet. Das Medium durchströmt die Durchtrittsöffnungen 2 in Richtung der eingezeichneten Pfeile.

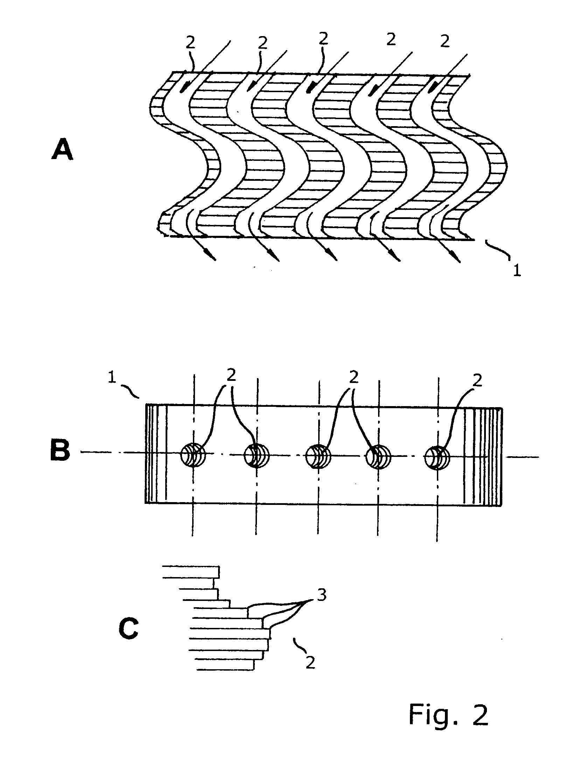

In Figur 2A ist ein Querschnitt einer weiteren Ausführungsform des Katalysators 1 nach der Erfindung dargestellt. Die Durchtrittsöffnungen 2 sind hier in Form von Mäandern ausgeführt. Die Mäander haben dabei die gleiche Form und sind so angeordnet, dass einzelne Schlingen der Mäander parallel zueinander verlaufen, so dass eine gute Ausnutzung des Volumens und des Katalysators 1 erreicht wird. Durch die mäanderförmige Ausführung der Durchtrittsöffnungen 2 wird eine Verlängerung des Weges eines Fluids durch den Katalysator 1 erreicht. Der Katalysator 1 kann dadurch mit geringer Höhe bei gleicher Länge der Durchtrittskanäle realisiert werden. Der Katalysator 1 ist auch hier aus Schichten aufgebaut.

Figur 2B zeigt eine Draufsicht auf den Katalysator 1, der in der Figur 2A gezeigt ist. In den Durchtrittsöffnungen 2 und am Rande des Katalysators sind die unterschiedlichen Schichten erkennbar. Ein solcher Katalysator 1 kann, wie auch aus der Figur 2A hervorgeht, aus Blechen gleicher Form hergestellt sein, die zueinander versetzt aufeinander gestapelt sind.

In der Figur 2C ist ein Ausschnitt aus einem Querschnitt durch die mäanderförmigen Durchtrittsöffnungen 2 dargestellt. Die Oberfläche der Durchtrittsöffnung 2 befindet sich dabei auf der rechten Seite in der Figur 2C. In der Ausführungsform nach der Figur 2C sind Schichten aufeinander gestapelt, wobei scharfkantig ausgeführte Ausnehmungen in den Schichten zueinander versetzt angeordnet sind. Dadurch entsteht im Inneren der Durchtrittsöffnung 2 ein Profil mit scharfen Kanten 3. Die Kanten 3 bewirken die Ausbildung von Turbulenzen an den Kanten, was für die Durchmischung des Fluids vorteilhaft ist. Die Katalyse wird dadurch verbessert.

Die in den Figuren 2A, 2B und 2C gezeigten mäanderförmigen Durchtrittsöffnungen 2 in dem monolithischen Katalysator 1 können alternativ auch helikal ausgeführt werden. Dies ließe sich jedoch durch einen einfachen Querschnitt nicht mehr ohne weiteres darstellen.

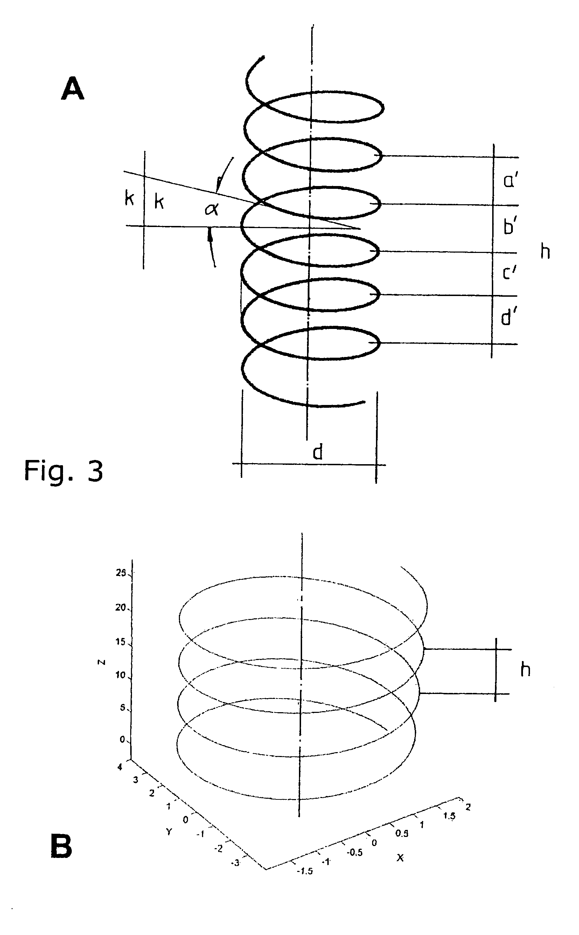

Figur 3A zeigt eine Helix, bei der der Steigungswinkel α und die Steigung k eingezeichnet sind. Weitere Parameter, die bei der Auslegung von helikalen Durchtrittsöffnungen zur Festlegung der Länge des Weges des Fluids durch den Katalysator verwendet werden können, sind der Durchmesser d und die Steigung h der Helix, sowie optional auch eine Änderung der Steigung, die durch unterschiedliche Steigungsmaße a', b', c' und d' schematisch angegeben ist. Die Durchtrittsöffnungen durch einen Katalysator nach der Erfindung können somit eine Steigung aufweisen, die sich im Verlauf der Helix ändert.

In Figur 3B ist eine Helix in dreidimensionaler Darstellung gezeigt, wobei die Steigung h eingezeichnet ist.

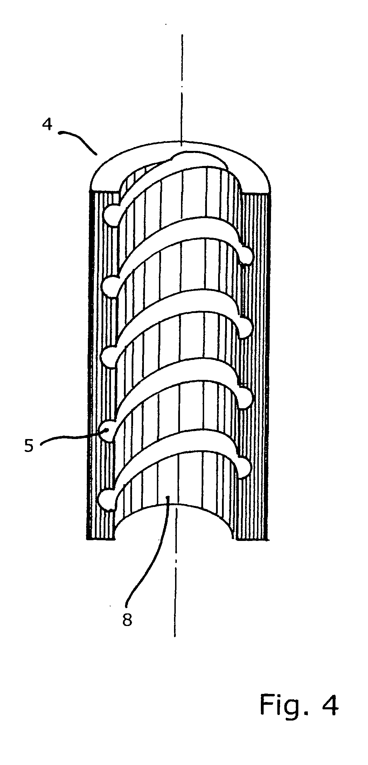

In Figur 4 ist ein Querschnitt durch ein Rohr 4 gezeigt, das auch ein Ausschnitt aus dem Katalysator 1 nach der Erfindung sein kann, wobei in dem gezeigten Ausschnitt ein durchgehender Hohlzylinder 8 eingebracht ist, durch den der Schnitt verläuft. Der Hohlzylinder kann in einer alternativen Ausführungsform auch als Hohlkegel ausgeführt sein. In die Oberfläche des Hohlzylinders 8 ist eine Ausnehmung 5 in Form einer Helix eingebracht, von der auf Grund der Schnittdarstellung nur eine Hälfte zu sehen ist. Diese Helix kann beispielsweise mit einem Werkzeug eingebracht werden, das wie ein Gewindeschneider arbeitet. Der Hohlzylinder 8 kann mit einem glattwandigen Körper verschlossen werden, sodass eine helikale Durchtrittsöffnung mit dem Profil der helikalen Ausnehmung 5 entsteht. Auf der Mantelfläche des Körpers kann eine weitere helikale Ausnehmung mit gleicher Steigung wie die der Helix in den Hohlzylinder 8 eingebracht sein, wobei die helikalen Ausnehmungen einander gegenüberliegend angeordnet werden, sodass sie einen gemeinsamen Kanal bilden. Dadurch ergibt sich eine helikale Durchtrittsöffnung, die in der Ausnehmung 5 in der Innenwandung des Hohlzylinders 8 in dem Katalysator 1 und in der Ausnehmung in der Außenwandung des eingesetzten Körpers verläuft. Alternativ können die Ausnehmungen am Umfang versetzt zueinander angeordnet werden, sodass sie sich nicht gegenüberliegen und sich dadurch zwei voneinander unabhängige helikale Durchtrittsöffnungen ergeben. Der Querschnitt der Ausnehmung 5 ist vorteilhaft halbkreisförmig oder rechteckig.

Das Rohr 4 kann monolithisch aus katalytisch wirksamem Material hergestellt sein. Der eingesetzte Körper kann einen Schichtaufbau aufweisen; alternativ kann er jedoch auch aus monolithischem Material bestehen.

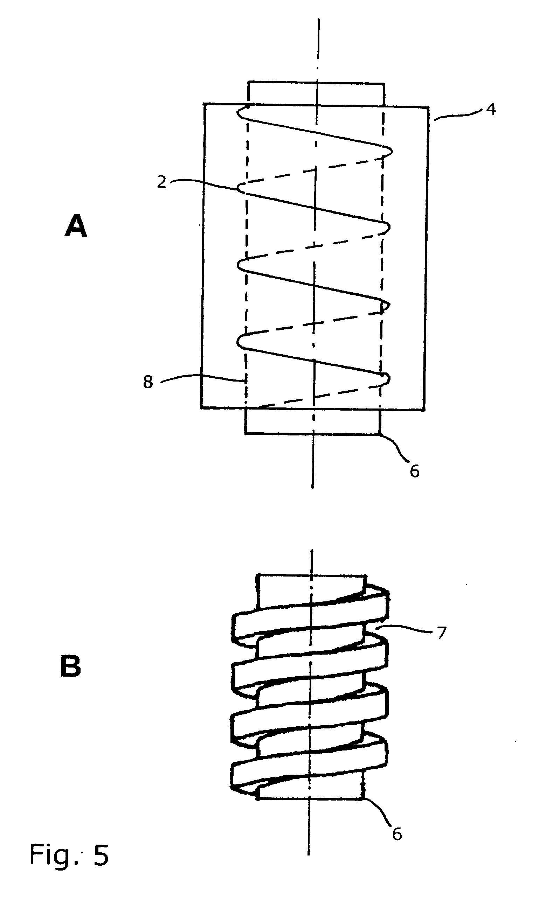

Figur 5A zeigt schematisch ein Rohr 4, das auch einen Ausschnitt aus einem Katalysator 1 nach der Erfindung sein kann, in dem ein Hohlzylinder 8 angeordnet ist, in den ein Körper 6 passgenau eingesetzt ist. Zwischen dem eingesetzten Körper 6 und der Wandung des Hohlzylinders 8 in dem Katalysator 1 befindet sich eine helikale Durchtrittsöffnung 2 durch den Katalysator. Die Durchtrittsöffnung 2 verläuft dabei entweder nur in einer Aussparung 5 in der Oberfläche des Körpers 6, oder nur in einer Aussparung 7 in der Wandung des Hohlzylinders 8 in dem Katalysator 1, oder in beiden.

In der Figur 5B ist ein im Wesentlichen zylinderförmiger Körper 6 gezeigt, der für das Einsetzen in einen Hohlzylinder 8 in einem Katalysator 1 vorgesehen ist. In die zylindrische Oberfläche dieses Körpers ist eine helikale Ausnehmung 7 mit rechteckigem Querschnitt eingebracht. Diese kann beispielsweise mit bekannten Verfahren für Außengewinde hergestellt werden. Ein solcher Körper kann in eine glattwandige Durchtrittsöffnung 2 in einem Katalysator 1 oder in ein Rohr 4 aus Katalysatormaterial eingesetzt werden, wobei dann die dadurch entstehende helikale Durchtrittsöffnung in der Ausnehmung 7 durch den eingesetzten Körper 6 verläuft. Der gezeigte Körper 6 kann auch in einem Hohlzylinder 8 verwendet werden, wie er in Figur 4 dargestellt ist.

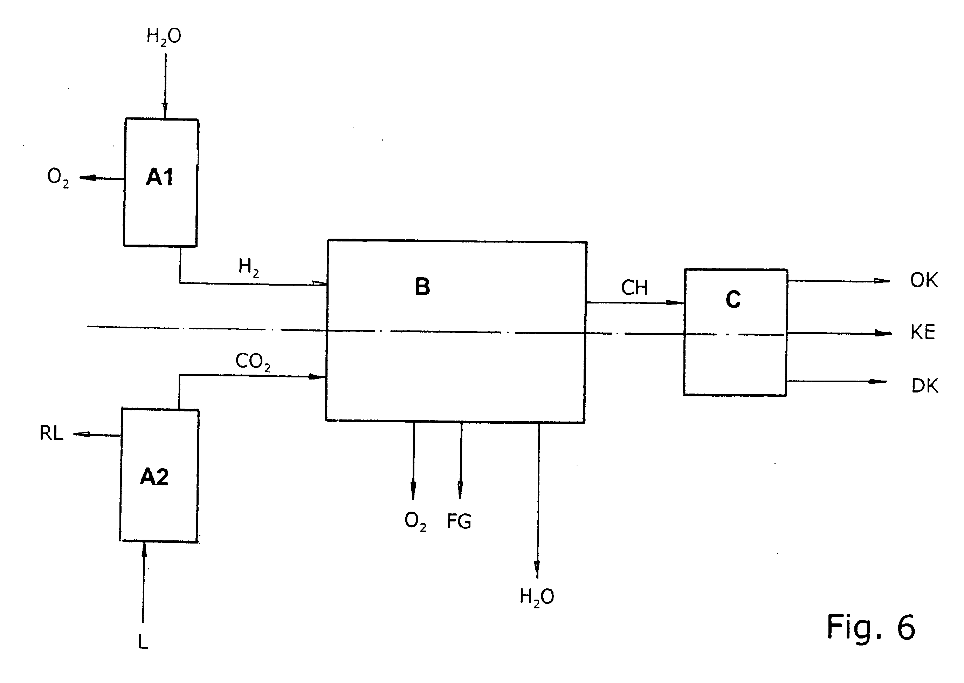

Figur 6 zeigt eine schematische Darstellung einer Anlage, in der in dem Reaktor B ein Katalysator nach der Erfindung eingesetzt wird. In der Anlage werden aus Wasser H₂O und in der Luft enthaltenem CO₂ verschiedene Kohlenwasserstoffe hergestellt. In der Komponente A1 der Anlage werden aus Wasser H₂O durch Elektrolyse molekularer Sauerstoff O₂ und molekularer Wasserstoff H₂ gewonnen. Der Sauerstoff O₂ wird für den Prozess nicht weiter verwendet. In der Komponente A2 der Anlage wird aus Luft L Kohlendioxid CO₂ abgespalten und Restluft RL wieder aus dem Prozess entlassen. Die Komponente B der Anlage ist ein Fischer-Tropsch-Reaktor oder alternativ ein Reaktor für die Sabatier-Synthese, die jeweils einen Katalysator nach der Erfindung enthalten. In dem Reaktor werden Wasserstoff H₂ und Kohlendioxid CO₂ eingespeist. Bei der Reaktion entstehen Sauerstoff O₂, Fehlgase FG, Wasser H₂O und als Produkte Kohlenwasserstoffe CH mit Kettenlängen von 10 bis 30 Kohlenstoffmolekülen. Die Kohlenwasserstoffe CH werden in einen Crack-Reaktor C geleitet, in dem sie zu Ottokraftstoff OK, Kerosin KE und Dieselkraftstoff DK gecrackt werden.

### Bezugszeichenliste

- 1: Monolithischer Katalysator
- 2: Durchtrittsöffnung
- 3: Kanten in Durchtrittsöffnung
- 4: Rohr aus Katalysatormaterial
- 5: Helikale Ausnehmung
- 6: Körper
- 7: Ausnehmung
- 8: Hohlzylinder oder Hohlkegel
- 11: Verdichter
- 12: Absorber
- 13: Pumpe
- 14: CO₂-Entgasungsstufe
- 15: Elektrodialysestufe
- 16: Hochtemperaturelektrolyse
- 17: Wärmetauscher
- 18: Reaktor
- 19: Zweiter Verdichter

- O₂: molekularer Sauerstoff
- H₂: molekularer Wasserstoff
- H₂O: Wasser
- CO: Kohlenmonoxid
- CO₂: Kohlendioxid
- KOH: Kalilauge
- K₂CO₃: Kaliumcarbonat
- H₂SO₄: Schwefelsäure
- K₂SO₄: Kaliumsulfat
- CH₃OH: Methanol

- L: Luft
- RL: Restluft
- FG: Fehlgase
- CH: Kohlenwasserstoffe
- OK: Ottokraftstoff
- KE: Kerosin
- DK: Dieselkraftstoff

## Patentansprüche

1. Monolithischer Feststoffkatalysator (1) für die Durchführung einer heterogen katalytischen chemischen Reaktion in einem Reaktionsfluid, welches den Katalysator (1) durchströmt und wenigstens ein Edukt umfasst, wobei der Katalysator (1) wenigstens eine Durchtrittsöffnung (2) für das Durchströmen des Reaktionsfluids durch den Katalysator (1) aufweist, **dadurch gekennzeichnet, dass** der Katalysator (1) einen schichtweisen Aufbau aus wenigstens zwei flächig aufeinander angeordneten Schichten (a, b) aufweist, wobei die Schichten so aufeinander aufgebracht sind, dass deren von der wenigstens einen Durchtrittsöffnung durchdrungenen Oberflächen im Wesentlichen fluiddicht aufeinander aufliegen, und wobei die wenigstens eine Durchtrittsöffnung (2) durch die Schichten (a, b) des Aufbaus verläuft und dabei die Durchtrittsöffnungen in den einzelnen Schichten so angeordnet sind, dass das Reaktionsfluid von einer Durchtrittsöffnung in einer ersten Schicht in eine Durchtrittsöffnung in der auf der ersten Schicht aufliegenden zweiten Schicht fließen kann, wobei wenigstens die Oberfläche, die in einer ersten Schicht (a) des Aufbaus wenigstens einen Teil eines Innenwandungsabschnitts der wenigstens einen Durchtrittsöffnung (2) definiert, aus einem ersten katalytisch wirksamen Material besteht und wenigstens die Oberfläche, die in einer zweiten Schicht (b) des Aufbaus wenigstens einen Teil eines Innenwandungsabschnitts der wenigstens einen Durchtrittsöffnung (2) definiert, aus einem zweiten katalytisch wirksamen Material besteht, so dass das Reaktionsfluid beim Durchströmen des Katalysators (1) mit wenigstens zwei verschiedenen katalytisch wirksamen Materialien in Kontakt gebracht wird.

2. Katalysator (1) nach Anspruch 1, **dadurch gekennzeichnet, dass** die Anzahl der flächig aufeinander angeordneten Schichten (a, b) in dem schichtweisen Aufbau des Katalysators (1) in dem Bereich von 10 bis 1000 liegt.

3. Katalysator (1) nach Anspruch 1 oder 2, **dadurch gekennzeichnet, dass** bei wenigstens einem Teil der Schichten (a, b) des Aufbaus nur die Oberfläche, die in den Schichten wenigstens einen Teil eines Innenwandungsabschnitts der wenigstens einen Durchtrittsöffnung (2) definiert, aus einem katalytisch wirksamen Material besteht.

4. Katalysator (1) nach Anspruch 1 oder 2, **dadurch gekennzeichnet, dass** wenigstens ein Teil der Schichten (a, b) des Aufbaus vollständig aus einem katalytisch wirksamen Material besteht.

5. Katalysator (1) nach einem der vorangehenden Ansprüche, **dadurch gekennzeichnet, dass** die katalytisch wirksamen Materialien unter Eisen, Kupfer, Kobalt, Platin, Ruthenium, Rubidium und Iridium sowie Legierungen oder Kombinationen der genannten Metalle ausgewählt sind.

6. Katalysator (1) nach einem der vorangehenden Ansprüche, **dadurch gekennzeichnet, dass** die Schichten (a, b) verschiedene Schichtdicken aufweisen, sodass durch die Auswahl der Schichtdicken und wahlweise der Schichtanzahl bei gleicher Reaktionsfluidfließgeschwindigkeit unterschiedliche Verweilzeiten des Reaktionsfluids für die verschiedenen katalytischen Materialien einstellbar sind.

7. Katalysator (1) nach einem der vorangehenden Ansprüche, **dadurch gekennzeichnet, dass** die wenigstens eine Durchtrittsöffnung (2) durch deckungsgleich oder zumindest überlappend nacheinander angeordnete durchgehende Ausnehmungen in den aufeinanderliegenden Schichten (a, b) gebildet ist.

8. Katalysator (1) nach einem der vorangehenden Ansprüche, **dadurch gekennzeichnet, dass** die wenigstens eine Durchtrittsöffnung (2) auf der einen Seite durch eine Ausnehmung (5) an der Innenwandung eines durch den Katalysatorschichtaufbau verlaufenden Hohlzylinders (8) oder Hohlkegels (8) und auf der anderen Seite durch einen in den Hohlzylinder (8) bzw. Hohlkegel (8) paßgenau einsetzbaren Körper (6) gebildet ist, wobei der paßgenau einsetzbare Körper (6) wahlweise eine ebene Außenwandung aufweist oder an seiner Außenwandung eine Ausnehmung (7) aufweist, die im eingesetzten Zustand so zum liegen kommt, dass sie in Verbindung mit der Ausnehmung (5) an der Innenwandung des Hohlzylinders (8) oder Hohlkegels (8) die wenigstens eine Durchtrittsöffnung ausbildet.

9. Katalysator (1) nach einem der vorangehenden Ansprüche, **dadurch gekennzeichnet, dass** die wenigstens eine Durchtrittsöffnung (2) zwischen dem Eintritt der Durchtrittsöffnung (2) in und dem Austritt der Durchtrittsöffnung (2) aus dem Katalysator (1) helikal verläuft.

10. Katalysator (1) nach einem der vorangehenden Ansprüche, **dadurch gekennzeichnet, dass** in wenigstens einem Abschnitt der wenigstens einen Durchtrittsöffnung (2) die Oberfläche, die in einer ersten Schicht (a) des Aufbaus wenigstens einen Teil eines Innenwandungsabschnitts der Durchtrittsöffnung (2) definiert, gegenüber der Oberfläche, die in einer flächig darauf angeordneten zweiten Schicht (b) wenigstens einen Teil eines Innenwandungsabschnitts der Durchtrittsöffnung (2) definiert, versetzt angeordnet ist, so dass hierdurch in dem wenigstens einen durch diese beiden Schichten (a, b) definierten Abschnitt der Durchtrittsöffnung (2) freistehende Kanten (4) im Inneren der Durchtrittsöffnung (2) vorliegen.

11. Anlage zur Durchführung heterogen katalytischer chemischer Reaktionen in einem Reaktionsfluid, wobei die Anlage einen Katalysator (1) nach einem der Ansprüche 1 bis 11 umfasst.

12. Anlage nach Anspruch 12, wobei die chemische Reaktion die Fischer-Tropsch-Synthese ist.

13. Anlage nach Anspruch 13, **dadurch gekennzeichnet, dass** sie zusätzlich eine Vorrichtung zur Gewinnung des Edukts CO₂ aus Luft L und/oder zusätzlich eine Vorrichtung zur Gewinnung des Edukts H₂ mittels Elektrolyse aus Wasser H₂O aufweist.

14. Verfahren zur Herstellung eines Katalysators (1) nach einem der Ansprüche 1 bis 11, bei dem Schichten (a, b), die wenigstens teilweise katalytisch aktive Oberflächen aus unterschiedlichem Material aufweisen, flächig aufeinander aufgebracht werden, wobei wenigstens die Oberfläche, die in einer ersten Schicht (a) des Aufbaus wenigstens einen Teil eines Innenwandungsabschnitts einer Durchtrittsöffnung (2) definiert, aus einem ersten katalytisch wirksamen Material besteht und wenigstens die Oberfläche, die in einer zweiten Schicht (b) des Aufbaus wenigstens einen Teil eines Innenwandungsabschnitts einer Durchtrittsöffnung (2) definiert, aus einem zweiten katalytisch wirksamen Material besteht, und wobei die Schichten so aufeinander aufgebracht werden, dass deren von der Durchtrittsöffnung durchdrungenen Oberflächen im Wesentlichen fluiddicht aufeinander aufliegen, und wobei die wenigstens eine Durchtrittsöffnung durch die Schichten (a, b) des Aufbaus verläuft und dabei die Durchtrittsöffnungen in den einzelnen Schichten so angeordnet sind, dass das Reaktionsfluid von einer Durchtrittsöffnung in einer ersten Schicht in eine Durchtrittsöffnung in der auf der ersten Schicht aufliegenden zweiten Schicht fließen kann.

15. Verfahren nach Anspruch 14, bei dem zur Herstellung der wenigstens einen Durchtrittsöffnung (2) eine Ausnehmung (5) an der Innenwandung eines durch den Katalysatorschichtaufbau verlaufenden Hohlzylinders (8) oder Hohlkegels (8) erzeugt wird und in den Hohlzylinder (8) bzw. Hohlkegel (8) paßgenau ein Körper (6) eingesetzt wird, wobei der paßgenau eingesetzte Körper (6) wahlweise eine ebene Außenwandung aufweist oder an seiner Außenwandung eine Ausnehmung (7) aufweist, die im eingesetzten Zustand so zum liegen kommt, dass sie in Verbindung mit der Ausnehmung (5) an der Innenwandung des Hohlzylinders (8)oder Hohlkegels (8) die wenigstens eine Durchtrittsöffnung (2) ausbildet.

## Claims

1. A monolithic solid catalyst (1) for carrying out a heterogeneous catalytic chemical reaction in a reaction fluid which flows through the catalyst (1) and includes at least one educt, wherein the catalyst (1) has at least one passage opening (2) for the reaction fluid to flow through the catalyst (1), **characterised in that** the catalyst (1) has a layered structure comprising at least two layers (a, b) which are arranged flat against each other, wherein the layers are so disposed on each other that their surfaces through which the at least one passage opening passes bear in substantially fluid-tight relationship against each other and wherein the at least one passage opening (2) extends through the layers (a, b) of the structure and **in that** case the passage openings are so arranged in the individual layers that the reaction fluid can flow from a passage opening in a first layer into a passage opening in the second layer disposed on the first layer, wherein at least the surface which in a first layer (a) of the structure defines at least a part of an inside wall portion of the at least one passage opening (2) comprises a first catalytically effective material and at least the surface which in a second layer (b) of the structure defines at least a part of an inside wall portion of the at least one passage opening (2) comprises a second catalytically effective material so that the reaction fluid on flowing through the catalyst (1) is brought into contact with at least two different catalytically effective materials.

2. A catalyst (1) according to claim 1 **characterised in that** the number of layers (a, b) arranged flat against each other in the layered structure of the catalyst (1) is in the range of 10 to 1000.

3. A catalyst (1) according to claim 1 or claim 2 **characterised in that** in at least a part of the layers (a, b) of the structure only the surface which in the layers defines at least a part of an inside wall portion of the at least one passage opening (2) comprises a catalytically effective material.

4. A catalyst (1) according to claim 1 or claim 2 **characterised in that** at least a part of the layers (a, b) of the structure consists entirely of a catalytically effective material.

5. A catalyst (1) according to one of the preceding claims **characterised in that** the catalytically effective materials are selected from iron, copper, cobalt, platinum, ruthenium, rubidium and iridium as well as alloys or combinations of said metals.

6. A catalyst (1) according to one of the preceding claims **characterised in that** the layers (a, b) are of different layer thicknesses so that it is possible to set different residence times for the reaction fluid for the various catalytic materials by the selection of the layer thicknesses and selectively the number of layers with the same reaction fluid flow speed.

7. A catalyst (1) according to one of the preceding claims **characterised in that** the at least one passage opening (2) is formed by through openings, which are arranged in coincident relationship or at least overlapping successive relationship, in the layers (a, b) which are disposed upon each other.

8. A catalyst (1) according to one of the preceding claims **characterised in that** the at least one passage opening (2) is formed on the one side by a recess (5) at the inside wall of a hollow cylinder (8) or hollow cone (8) extending through the catalyst layer structure and on the other side by a body (6) which can be inserted with an accurate fit into the hollow cylinder (8) or hollow cone (8), wherein the body (6) which can be inserted with an accurate fit selectively has a flat outside wall or at its outside wall a recess (7) which in the inserted condition is so disposed that in conjunction with the recess (5) at the inside wall of the hollow cylinder (8) or hollow cone (8) it provides the at least one passage opening.

9. A catalyst (1) according to one of the preceding claims **characterised in that** the at least one passage opening (2) extends helically between the entry of the passage opening (2) into the catalyst (1) and the exit of the passage opening (2) from the catalyst (1).

10. A catalyst (1) according to one of the preceding claims **characterised in that** in at least one portion of the at least one passage opening (2) the surface which in a first layer (a) of the structure defines at least a part of an inside wall portion of the passage opening (2) is arranged displaced relative to the surface which in a second layer (b) arranged flat thereon defines at least a part of an inside wall portion of the passage opening (2) so that as a result exposed edges (4) are present in the interior of the passage opening (2) in the at least one portion of the passage opening (2), that is defined by said two layers (a, b).

11. An installation for carrying out heterogeneous catalytic chemical reactions in a reaction fluid wherein the installation includes a catalyst (1) according to one of claims 1 to 11.

12. An installation according to claim 11 wherein the chemical reaction is the Fischer-Tropsch synthesis.

13. An installation according to claim 12 **characterised in that** it additionally has an apparatus for obtaining the educt CO₂ from air L and/or additionally an apparatus for obtaining the educt H₂ by means of electrolysis from water H₂O.

14. A process for the production of a catalyst (1) according to one of claims 1 to 11 in which layers (a, b) which have at least partially catalytically active surfaces of differing material are applied flat against each other, wherein at least the surface which in a first layer (a) of the structure defines at least a part of an inside wall portion of a passage opening (2) comprises a first catalytically effective material and at least the surface which in a second layer (b) of the structure defines at least a part of an inside wall portion of a passage opening (2) comprises a second catalytically effective material and wherein the layers are so disposed upon each other that their surfaces through which the passage opening passes bear in substantially fluid-tight relationship against each other and wherein the at least one passage opening extends through the layers (a, b) of the structure and in that case the passage openings are so arranged in the individual layers that the reaction fluid can flow from a passage opening in a first layer into a passage opening in the second layer disposed on the first layer.

15. A process according to claim 14 in which to produce the at least one passage opening (2) a recess (5) is produced at the inside wall of a hollow cylinder (8) or hollow cone (8) extending through the catalyst layer structure and a body (6) is inserted with an accurate fit into the hollow cylinder (8) or hollow cone (8), wherein the body (6) which is inserted with an accurate fit selectively has a flat outside wall or at its outside wall a recess (7) which in the inserted condition is so disposed that in conjunction with the recess (5) at the inside wall of the hollow cylinder (8) or hollow cone (8) it provides the at least one passage opening.

## Revendications

1. Catalyseur solide monolithique (1) pour l'exécution d'une réaction chimique catalytique hétérogène dans un fluide de réaction qui traverse le catalyseur (1) et comprend au moins un éduit, le catalyseur (1) présentant une ouverture de traversée (2) pour le passage du fluide de réaction à travers le catalyseur (1), **caractérisé en ce que** le catalyseur (1) présente une construction en couches formée d'au moins deux couches (a, b) disposées à plat l'une sur l'autre, les couches étant appliquées les unes sur les autres de manière telle que leurs surfaces qui sont pénétrées par au moins une ouverture de traversée sont appliquées l'une sur l'autre de façon sensiblement étanche au fluide, et l'ouverture de traversée (2), au moins au nombre de une, s'étendant à travers les couches (a, b) de la construction, et les ouvertures de traversée formées dans les différentes couches étant à cet effet disposées de telle manière que le fluide de réaction peut s'écouler d'une ouverture de traversée d'une première couche dans une ouverture de traversée de la deuxième couche reposant sur la première couche, au moins la surface qui définit, dans une première couche (a) de la construction, au moins une partie d'un segment de paroi intérieure de l'ouverture de traversée (2), au moins au nombre de une, étant composée d'une première matière à action catalytique, et au moins la surface qui définit dans une deuxième couche (b) de la construction au moins une partie d'un segment de paroi intérieure de l'ouverture de traversée (2), au moins au nombre de une, étant composée d'une deuxième matière à action catalytique, si bien que lorsqu'il traverse le catalyseur (1), le fluide de réaction est mis en contact avec au moins deux matières à action catalytique différentes.

2. Catalyseur (1) selon la revendication 1, **caractérisé en ce que** le nombre des couches (a, b) disposées à plat les unes sur les autres dans la construction en couches du catalyseur (1) est compris dans l'intervalle de 10 à 1000.

3. Catalyseur (1) selon la revendication 1 ou 2, **caractérisé en ce que**, pour au moins une partie des couches (a, b) de la construction, seule la surface qui définit dans les couches au moins une partie d'un segment de paroi intérieure de l'ouverture de traversée (2), au moins au nombre de une, est composée d'une matière à action catalytique.

4. Catalyseur (1) selon la revendication 1 ou 2, **caractérisé en ce qu'**au moins une partie des couches (a, b) de la construction est entièrement composée d'une matière à action catalytique.

5. Catalyseur (1) selon l'une des revendications précédentes, **caractérisé en ce que** les matières à action catalytique sont choisies parmi le fer, le cuivre, le cobalt, le platine, le ruthénium, le rubidium et l'iridium, ainsi que parmi des alliages et des combinaisons des métaux précités.

6. Catalyseur (1) selon l'une des revendications précédentes, **caractérisé en ce que** les couches (a, b) présentent des épaisseurs de couches différentes, de sorte que, à égalité de la vitesse d'écoulement du fluide de réaction, il est possible de régler différents temps de séjour du fluide de réaction pour les différentes matières catalytiques par le biais de la sélection des épaisseurs des couches et éventuellement du nombre des couches.

7. Catalyseur (1) selon l'une des revendications précédentes, **caractérisé en ce que** l'ouverture de traversée (2), au moins au nombre de une, est formée par des évidements débouchants, disposés les uns à la suite des autres en coïncidence ou au moins en se chevauchant, pratiqués dans les couches (a, b) qui sont disposées les unes sur les autres.

8. Catalyseur (1) selon l'une des revendications précédentes, **caractérisé en ce que** l'ouverture de traversée (2), au moins au nombre de une, est formée sur un côté par un évidement (5) formé sur la paroi intérieure d'un cylindre creux (8) ou d'un cône creux (8) qui s'étend à travers la construction en couches du catalyseur, et sur l'autre côté par un corps (6) qui peut être emboîté avec un ajustement précis dans le cylindre creux (8) ou dans le cône creux (8), le corps (6) qui peut être emboîté avec un ajustement précis présentant au choix une paroi extérieure plane ou, sur sa paroi extérieure, un évidement (7) qui, à l'état emboîté, vient se placer de manière telle qu'il crée l'ouverture de traversée, au moins au nombre de une, en combinaison avec l'évidement (5) de la paroi intérieure du cylindre creux (8) ou du cône creux (8).

9. Catalyseur (1) selon l'une des revendications précédentes, **caractérisé en ce que** l'ouverture de traversée (2), au moins au nombre de une, s'étend en hélice entre l'entrée dans le catalyseur (1) de l'ouverture de traversée (2) et la sortie du catalyseur (1) de l'ouverture de traversée (2).

10. Catalyseur (1) selon l'une des revendications précédentes, **caractérisé en ce que** dans au moins un segment de l'ouverture de traversée (2), au moins au nombre de une, la surface qui définit dans une première couche (a) de la construction au moins une partie du segment de la paroi intérieure de l'ouverture de traversée (2) est disposée de façon décalée par rapport à la surface qui définit, dans une deuxième couche (b) disposée à plat au-dessus, au moins une partie d'un segment de paroi intérieure de l'ouverture de traversée (2), de telle sorte que, par ce moyen, dans le segment de l'ouverture de traversée (2) défini par une des deux couches (a, b), au moins au nombre de un, des arêtes libres (4) sont formées à l'intérieur de l'ouverture de traversée (2).

11. Dispositif pour l'exécution de réactions chimiques catalytiques hétérogènes dans un fluide de réaction, le dispositif comprenant un catalyseur (1) selon l'une des revendications 1 à 11.

12. Dispositif selon la revendication 12, dans lequel la réaction chimique est la synthèse de Fischer-Tropsch.

13. Dispositif selon la revendication 13, **caractérisé en ce qu'**il présente en supplément un appareil servant à récupérer l'éduit CO₂ de l'air L et/ou, en supplément, un appareil pour récupérer l'éduit H₂ par électrolyse de l'eau H₂O.

14. Procédé de fabrication d'un catalyseur (1) selon l'une des revendications 1 à 11, dans lequel des couches (a, b) qui présentent des surfaces au moins partiellement à action catalytique faites d'une matière différente sont disposées à plat les unes sur les autres, au moins la surface qui définit dans une première couche (a) de la construction au moins une partie d'un segment de paroi intérieure d'une ouverture de traversée (2) étant composée d'une première matière à action catalytique, et au moins la surface qui définit, dans une deuxième couche (b) de la construction, au moins une partie d'un segment de paroi intérieure d'une ouverture de traversée (2), étant composée d'une deuxième matière à action catalytique, les couches étant disposées les unes sur les autres de manière telle que leurs surfaces pénétrées par l'ouverture de traversée reposent les unes sur les autres de façon sensiblement étanche au fluide, et l'ouverture de traversée, au moins au nombre de une, s'étendant à travers les couches (a, b) de la construction et les ouvertures de traversée étant disposées dans les différentes couches de manière telle que le fluide de réaction peut s'écouler d'une ouverture de traversée d'une première couche dans une ouverture de traversée de la deuxième couche disposée sur la première couche.

15. Procédé selon la revendication 14, dans lequel, pour la formation de l'ouverture de traversée (2), au moins au nombre de une, on forme un évidement (5) dans la paroi intérieure d'un cylindre creux (8) ou d'un cône creux (8) qui s'étend à travers la construction en couches de catalyseur et on emboîte un corps (6) avec un ajustement précis dans le cylindre creux ou dans le cône creux (8), le corps (6) emboîté avec un ajustement précis présentant au choix une paroi extérieure lisse ou, sur sa paroi extérieure, un évidement (7) qui, dans l'état emboîté, vient se disposer de manière à former l'ouverture de traversée (2), au moins au nombre de une, en combinaison avec l'évidement (5) ménagé dans la paroi intérieure du cylindre creux (8) ou du cône creux (8).
